# EUROPÄISCHE PATENTSCHRIFT

(11) **EP 3 870 624 B1**
(45) Veröffentlichungstag und Bekanntmachung des Hinweises auf die Patenterteilung: **07.12.2022**
(21) Anmeldenummer: 19790212.5
(22) Anmeldetag: 23.10.2019
(51) Int. Cl.: C08G 18/48, C08G 18/63, C08G 18/76, C08G 18/16, C08G 18/18, C08G 18/20, C08G 18/24, C08G 18/38, C08G 101/00

(54) **POLYURETHANSCHAUMSTOFFE MIT VERMINDERTEM GEHALT AN AROMATISCHEN AMINEN**
POLYURETHANE FOAMS WITH REDUCED CONTENT OF AROMATIC AMINES
MOUSSES DE POLYURÉTHANE À TENEUR EN AMINES AROMATIQUES RÉDUITE

(30) Priorität: 24.10.2018 EP 18202395
(43) Veröffentlichungstag der Anmeldung: 01.09.2021
(73) Patentinhaber: BASF SE, 67056 Ludwigshafen am Rhein (DE)
(72) Erfinder: SCHUETTE, Markus, 49448 Lemfoerde (DE); LUTTER, Heinz-Dieter, 49448 Lemfoerde (DE); FAEHMEL, Manuela, 49448 Lemfoerde (DE); MARTIN, Marc Claude, 49448 Lemfoerde (DE); DEGLMANN, Peter, 67056 Ludwigshafen (DE); DUWENHORST, Joern, 49448 Lemfoerde (DE)
(74) Vertreter: BASF IP Association
(86) Internationale Anmeldenummer: PCT/EP2019/078914
(87) Internationale Veröffentlichungsnummer: WO 2020/084003

(56) Entgegenhaltungen:
- DE-A1- 19 928 687

## Beschreibung

Die vorliegende Erfindung betrifft ein Verfahren zur Herstellung von Polyurethanschaumstoffen mit einer Dichte von 30 g/dm³ bis 70 g/dm³, bei dem man (a) aromatisches Polyisocyanat mit (b) polymeren Verbindungen mit gegenüber Isocyanaten reaktiven Gruppen, (c) gegebenenfalls Kettenverlängerungs- und/oder Vernetzungsmittel, (d) Katalysator, (e) Treibmittel, enthaltend Wasser, (f) 0,1 bis 5 Gew.-% Lactam, bezogen auf das Gesamtgewicht der Komponenten (a) bis (f) und (g) gegebenenfalls Zusatzstoffen, bei einem Isocyanatindex von 50 bis 95 zu einer Reaktionsmischung vermischt, die Reaktionsmischung zum Polyurethanschaumstoff umsetzt, wobei der Katalysator Metallkatalysator und Aminkatalysator enthält und der Aminkatalysator tertiäre Stickstoffatome aufweist und in einer solchen Menge eingesetzt wird, dass der Gehalt an tertiären Stickstoffatomen im Aminkatalysator, bezogen auf das Gewicht der Ausgangskomponenten (a) bis (e), von 0,0001 bis 0,003 mol /100 g Schaum beträgt .Weiter betrifft die vorliegende Erfindung einen Polyurethanschaumstoff, erhältlich nach einem solchen Verfahren und die Verwendung eines solchen Polyurethanweichschaumstoffs zur Herstellung von Kissen, Sitzpolstern und Matratzen.

In Polyurethanschaumstoffen können unter bestimmten Bedingungen, insbesondere bei Wassergehalten von größer 1 Gew.-% und einem Isocyanatindex von kleiner als 100, aromatische Amine, insbesondere Toluoldiamin (TDA) und Methylendiphenylendiamin (MDA) in einem Konzentrationsbereich von 10-200 ppm nachgewiesen werden. Diese treten insbesondere an der Oberfläche von Formschaumstoffen auf. Aromatische Amine sind aufgrund ihres kanzerogenen und gentoxikologischen Potenzials seit Jahrzehnten Gegenstand zahlreicher interner und externer Untersuchungen. Bekannte Maßnahmen zur Reduktion (nicht Vermeidung!) des Gehaltes an aromatischen Aminen beruhen auf der Verwendung von reaktiven Fängerverbindungen wie z.B. Carbonsäureanhydriden oder aliphatischen Isocyanaten.

Es ist bekannt, dass durch den Einsatz unterschiedlicher Aminfänger der Gehalt an aromatischen Aminen verringert werden kann. So beschreibt EP1461193 ein Trennmittel und ein Verfahren zur Herstellung von Kunststofformteilen wobei Trennmittel für die Herstellung von Kunststoffformteilen eingesetzt werden, die die Konzentration unerwünschter, potentiell gesundheitsschädlicher Substanzen in der Randzone und an der Oberfläche des Formteils verringern, sowie ein Verfahren zur Herstellung von schadstoffarmen Kunststoffformteilen unter Verwendung solcher Trennmittel. Eingesetzt werden unter anderem ein oder mehrere Zusatzstoffe aus der Gruppe Derivate organischer Säuren, Derivate der Kohlensäure, Di-oder Polyisocyanate, aliphatische, cycloaliphatische, araliphatische, aromatische und heterocyclische Isocyanate und Derivate von mineralischen Säuren.

Aus DE-A 199 19 826, DE-A 199 19 827, DE-A 199 28 675, DE-A 199 28 676, DE-A 199 28 687, DE-A 199 28 688 und DE-A 199 28 689 gehen eine Vielzahl kostengünstigerer Zusätze bzw. Hilfsmittel aus unterschiedlichen chemischen Verbindungsklassen hervor, mit denen die intermediäre Bildung primärer aromatischer Diamine wie TDA oder MDA (Methylendiphenylendiamin) bei der Herstellung von Polyurethanweichschaumstoffen reduziert werden soll. In den Beispielen werden diese Reaktivkomponenten meist in einer Menge von ca. 5 Gew.-%, bezogen auf die isocyanatreaktiven Substanzen, zugegeben. In DE19928687 wird unter anderem auch der Einsatz von Lactamen offenbart. Ein genereller Nachteil des Zusatzes derartiger Hilfsmittel zur Kunststoffformulierung, die als "Fänger" für unerwünschte Substanzen wirken, besteht im Auftreten signifikanter Veränderungen der mechanischen Eigenschaften des Endproduktes, was gegebenenfalls eine Neu- oder Weiterentwicklung der Zusammensetzung der Formulierung oder des Polymerisat-Rohmaterials erforderlich macht. Dies gilt umso mehr, als meist erhebliche Mengen des Hilfsstoffs zugesetzt werden müssen, um die unerwünschten Substanzen effektiv zu verringern, wodurch die mechanischen Eigenschaften des Schaumstoffs beeinträchtigt werden.

Nachteilig ist, dass sehr hohe Mengen an Aminfängern eingesetzt werden müssen, um den Gehalt an MDA zu reduzieren. Insbesondere bei hohem Wassergehalt von größer als 1 Gew.-% und einem geringen Isocyanatindex von kleiner als 100 gelingt die Reduktion aromatischer Amine mit den beschriebenen Verfahren aber nur unzureichend. Weiter führt der hohe Anteil an Aminfängern zu einem Austreiben der Fängersubstanzen und damit zu einer erhöhten Emission von flüchtigen, organischen Substanzen.

Aufgabe der vorliegenden Erfindung war es daher ein Verfahren zur Herstellung von Polyurethanschaumstoffen zu liefern, das trotz eines hohen Gehalts an umweltfreundlichem Treibmittel Wasser und eines geringen Isocyanatindexes von kleiner als 95 zu Schaumstoffen mit einem deutlich verringerten Gehalt an aromatischen Aminen, insbesondere an der Oberfläche von Formschaumstoffen, führt. Eine mögliche Erklärung für das Auftreten von MDA bei Isocyanatindizes von kleiner als 100 ist die Tatsache, dass bei der Bildung der Polyurethanschaumstoffe nicht ausreichend Isocyanatgruppen zur Verfügung stehen, um mit MDA, welches sich durch die Isocyanat-Wasser-Reaktion bildet, weiter zu Harnstoffbindungen abzureagieren. Das so gebildete MDA kann sich insbesondere bei Herstellung von Formschaumstoffen durch Kondensation an der Grenzfläche zur kälteren Formoberfläche anreichern.

Die erfindungsgemäße Aufgabe wird überraschenderweise gelöst durch ein Verfahren zur Herstellung von Polyurethanschaumstoffen mit einer Dichte von 30 g/dm³ bis 70 g/dm³, bei dem man (a) aromatisches Polyisocyanat mit (b) polymeren Verbindungen mit gegenüber Isocyanaten reaktiven Gruppen, (c) gegebenenfalls Kettenverlängerungs- und/oder Vernetzungsmittel, (d) Katalysator, (e) Treibmittel, enthaltend Wasser, (f) 0,1 bis 5 Gew.-% Lactam, bezogen auf das Gesamtgewicht der Komponenten (a) bis (f) und (g) gegebenenfalls Zusatzstoffen, bei einem Isocyanatindex von 50 bis 95 zu einer Reaktionsmischung vermischt, die Reaktionsmischung zum Polyurethanschaumstoff umsetzt, wobei der Katalysator Metallkatalysator und Aminkatalysator enthält und der Aminkatalysator tertiäre Stickstoffatome aufweist und in einer solchen Menge eingesetzt wird, dass der Gehalt an tertiären Stickstoffatomen im Aminkatalysator, bezogen auf das Gewicht der Ausgangskomponenten (a) bis (e), von 0,0003 bis 0,001 mol /100 g Schaum beträgt. Weiter betrifft die vorliegende Erfindung einen Polyurethanschaumstoff, erhältlich nach einem solchen Verfahren und die Verwendung eines solchen Polyurethanweichschaumstoffs zur Herstellung von Kissen, Sitzpolstern und Matratzen.

Als erfindungsgemäßer Polyurethanschaumstoff wird vorzugsweise ein Polyurethanweichschaumstoff verstanden. Dieser weist eine Dichte von 30 bis 70 g/L, vorzugsweise 40 bis 60 g/L und insbesondere 45 bis 55 g/L auf. Weiter weisen die erfindungsgemäßen Polyurethanschaumstoffe vorzugsweise eine Eindruckhärte nach DIN EN ISO 2439, Verfahren A, von weniger als 800 N, besonders bevorzugt weniger als 500 N, mehr bevorzugt weniger als 200 N und insbesondere weniger als 100 N auf. Vorzugsweise ist der Druckverformungsrest, gemessen bei 70°C, 50% Stauchung über 22 Stunden nach DIN EN ISO 1856, kleiner 20 %, besonders bevorzugt kleiner 15 %, mehr bevorzugt kleiner 10 % und insbesondere kleiner 5 %.

Als aromatische Polyisocyanate (a) können alle üblicherweise in der Polyurethanchemie eingesetzten aromatischen Isocyanate eingesetzt werden. Diese enthalten vorzugsweise Toluoldiisocyanat-Isomere (TDI-Isomere) und Isomere des Methylendiphenylendiisocyanats sowie dessen höherkernige Homologe (als MDI bezeichnet). Besonders bevorzugt wird als aromatisches Polyisocyanat, eine Mischung enthaltend 2,4'-MDI, 4,4'-MDI und höherkernige Homologe des MDI eingesetzt. Weiter können auch modifizierte Isocyanate, wie Isocyanate, die durch Einbau von Gruppen, ausgehend von Isocyanatgruppen, in denen Polyisocyanate entstehen, eingesetzt werden. Beispiele für derartige Gruppen sind Allophanat-, Carbodiimid-, Uretonimin-, Isocyanurat-, Harnstoff- und Biuretgruppen. In einer bevorzugten Ausführungsform beträgt der Anteil von 2,4'-Diphenylmethandiisocyanat vorzugsweise 5 bis 30 Gew.-% und von 4,4'-Diphenylmethandiisocyanat vorzugsweise 40 bis 80 Gew.-%, jeweils bezogen auf das Gesamtgewicht der aromatischen Polyisocyanate (a). In einer bevorzugten Ausführungsform beträgt der Anteil von höherkernigen Homologen des Diphenylmethandiisocyanats 3 bis 30 Gew.-%, besonders bevorzugt 5 bis 25 Gew.-%.

Die aromatischen Polyisocyanate können auch in Form von Prepolymeren eingesetzt werden. Dazu werden die oben beschriebenen aromatischen Polyisocyanate (a1) im Überschuss mit Verbindungen mit gegenüber Isocyanaten reaktiven Verbindungen (a2) umgesetzt. Dabei werden als Verbindungen (a2) vorzugsweise die unter (b) genannten polymeren Verbindungen mit gegenüber Isocyanat reaktiven Gruppen eingesetzt. Werden Isocyanatprepolymere als aromatische Isocyanate (a) eingesetzt, weisen diese vorzugsweise einen NCO-Gehalt von 16 bis 31 Gew.-% auf.

Polymere Verbindungen mit gegenüber Isocyanat reaktiven Gruppen (b) weisen ein zahlenmittleres Molekulargewicht von mindestens 450 g/mol, besonders bevorzugt 460 bis 12000 g/mol auf und weisen mindestens zwei gegenüber Isocyanat reaktive Wasserstoffatome pro Molekül auf. Als polymere Verbindungen mit gegenüber Isocyanat reaktiven Gruppen (b) kommen bevorzugt Polyesteralkohole, und/oder Polyetheralkohole mit einer Funktionalität von 2 bis 8, insbesondere von 2 bis 6, vorzugsweise von 2 bis 4 und einem mittleren Equivalentmolekulargewicht im Bereich von 400 bis 3000 g/mol, vorzugsweise 1000 bis 2500 g/mol, in Betracht. Insbesondere werden Polyetheralkohole eingesetzt.

Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Bei Anlagerung von Alkylenoxyden spricht man auch von Polyalkylenoxydpolyolen. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren auch Di- oder Multimetallcyanidverbindungen, sogenannte DMC-Katalysatoren, eingesetzt werden. Zur Herstellung von viskoelastischen Polyurethanweichschaumstoffen werden insbesondere zwei- und/oder dreifunktionelle Polyalkylenoxydpolyole eingesetzt.

Weiter können als Verbindung mit mindestens zwei aktiven Wasserstoffatomen Polyesterpolyole, beispielsweise herstellbar aus organischen Dicarbonsäuren mit 2 bis 12 Kohlenstoffatomen, vorzugsweise aliphatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen, eingesetzt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und die isomeren Naphthalindicarbonsäuren. Vorzugsweise wird Adipinsäure eingesetzt. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden.

Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure und Hydroxybenzoesäuren. Vorzugsweise eingesetzt wird Dipropylenglykol.

Als Kettenverlängerungsmittel und/oder Vernetzungsmittel (c) werden Substanzen mit einem Molekulargewicht von kleiner 400 g/mol, bevorzugt von 60 bis 350 g/mol eingesetzt, wobei Kettenverlängerer 2 gegenüber Isocyanaten reaktive Wasserstoffatome und Vernetzungsmittel mindestens 3 gegenüber Isocyanat reaktive Wasserstoffatome aufweisen. Diese können einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder aromatische Diole, sowie Diole mit aromatischen Strukturen, mit 2 bis 14, vorzugsweise 2 bis 10 Kohlenstoffatomen, wie Ethylenglykol, 1,3-Propandiol, 1,10-Decandiol, o-, m-, p-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxycyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (c) Monoethylenglycol, 1,4-Butandiol und/oder Glycerin eingesetzt.

Sofern Kettenverlängerungsmittel, Vernetzungsmittel oder Mischungen davon Anwendung finden, kommen diese zweckmäßigerweise in Mengen von 0,1 bis 20 Gew.-%, vorzugsweise 0,5 bis 10 Gew.-% und insbesondere 0,8 bis 5 Gew.-%, bezogen auf das Gewicht der Komponenten (b) und (c) zum Einsatz.

Als Katalysatoren (d) zur Herstellung der erfindungsgemäßen Polyurethanschaumstoffe werden Metallkatalysator und Aminkatalysator, der tertiäre Stickstoffatome aufweist, eingesetzt. Dabei gelten im Rahmen der Erfindung vorzugsweise Verbindungen mit tertiärem Stickstoffatom als Aminkatalysatoren, die eine relative Reaktivität, bezogen auf Triethylendiamin, von mindestens 5% aufweisen. Dabei wird die relative Reaktivität ermittelt, indem man die Geschwindigkeitskonstante der zu testenden Verbindung im Modellsystem Butanol-Phenylisocyanat mit einer Konzentration von jeweils 0,50 mol/Liter bei 50 °C im Lösungsmittel Acetonitril ermittelt und mit der von 1,4-Diazabicyclo[2.2.2]octan (Triethylendiamin) vergleicht. Eine relative Reaktivität von mindestens 5% ist dabei gegeben wenn für den zu prüfenden Katalysator bei ansonsten identischen Bedingungen die Geschwindigkeitskonstante gegenüber der Geschwindigkeitskonstante bei Einsatz von 1,4-Diazabicyclo[2.2.2]octan maximal um den Faktor 20 kleiner ist. Details zur Bestimmung der Geschwindigkeitskonstante sind in Schwetlick et. Al. Im J. Chem. Soc Perkin Trans. 2, 1994, Seiten 599 bis 608 beschrieben (Geschwindigkeitskonstante k_{b} für 1,4-Diazabicyclo[2.2.2]octan unter den genannten Bedingungen = 2,68 dm⁶ mol⁻² s⁻¹). Vorzugsweise enthalten die Aminkatalysatoren reaktive Aminkatalysatoren, das heißt solche, die gegenüber Isocyanatgruppen reaktive Gruppen enthalten. Diese weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, vorzugsweise primäre Amingruppen, sekundäre Amingruppen oder Hydroxylgruppen und besonders bevorzugt primäre Amingruppen oder Hydroxylgruppen auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen Verbindungen, die neben der bzw. den gegenüber Isocyanaten reaktiven Gruppen vorzugsweise eine oder mehrere, vorzugsweise zwei, tertiäre Aminogruppen aufweisen.

Vorzugsweise tragen die tertiären Aminogruppen der einbaubaren Katalysatoren mindestens zwei aliphatische Kohlenwasserstoffreste, vorzugsweise mit 1 bis 10 Kohlenstoffatomen je Rest, besonders bevorzugt mit 1 bis 6 Kohlenstoffatomen je Rest. Besonders bevorzugt tragen die tertiären Aminogruppen zwei Reste, unabhängig voneinander ausgewählt aus Methyl- (H₃C-) und Ethylrest (H₃C-H₂C-) sowie einen weiteren organischen Rest. Beispiele für einbaubare Katalysatoren, die in einer bevorzugten Ausführungsform der Erfindung eingesetzt werden, sind ausgewählt aus der Gruppe, bestehend aus Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-aminoethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3 aminopropyl)-bis(aminoethylether), 3-Dimethylaminoisopropyl-diisopropanolamin, N-[2-[2-(Dimethylamino)ethoxy]ethyl]-N-methyl-1,3,-propandiamin und Mischungen davon. Besonders bevorzugt wird N-[2-[2-(Dimethylamino)ethoxy]ethyl]-N-methyl-1,3,-propandiamin eingesetzt.

Neben den einbaubaren Aminkatalysatoren können weiter übliche Amin-Katalysatoren zur Herstellung der Polyurethane eingesetzt werden. Diese sind vorzugsweise ausgewählt aus der Gruppe, bestehend aus 2,3-Dimethyl-3,4,5,6-tetrahydropyrimidin, Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)- und Mischungen daraus.

Dabei wird der Aminkatalysator in einer solchen Menge eingesetzt, dass der Gehalt an tertiären Stickstoffatomenvon 0,0001 bis 0,003 mol/100 g Schaum, vorzugsweise 0,0004 bis 0,002 und insbesondere 0,0005 bis 0,001 mol pro 100 g Schaum beträgt. Vorzugsweise enthalten die Aminkatalysatoren ausschließlich einbaubare Aminkatalysatoren.

Als Metallkatalysatoren können alle üblichen Metallkatalysatoren eingesetzt werden. Diese umfassen organische Metallverbindungen, vorzugsweise organische Zinnverbindungen, wie Zinn-(Il)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, Dibutylzinn-dineodecanoat, sowie Bismutcarboxylate, wie Bismut(III)-neodecanoat, Bismut-2-ethylhexanoat und Bismut-octanoat oder Mischungen davon. Vorzugsweise werden als Metallkatalysator solche Metallkatalysatoren ausgewählt, die hydrolysestabil sind, wie beispielsweise Zinn(IV)-Verbindungen. Insbesondere wird Dibutylzinn-dineodecanoat als Metallkatalysator eingesetzt.

Die Katalysatoren und die einzusetzenden Katalysatormengen werden dabei so ausgewählt, dass die Polyurethanreaktionsmischung vorzugsweise eine Steigzeit von 30 bis 150 Sekunden, besonders bevorzugt 40 bis 110 Sekunden und insbesondere 50 bis 105 Sekunden aufweist, wobei die erfindungsgemäße Mengenbeschränkung für tertiären Stickstoff berücksichtigt wird. Als Steigzeit ist die Zeit bis zur Erreichung der maximalen Höhe im Beschertest bei einer Einwaage von 100 g Polyol-Komponente und 50 g Isocyanat-Komponente verstanden. Weiter liegt die Startzeit vorzugsweise im Bereich von 10 bis 30 Sekunden, besonders bevorzugt 12 bis 25 Sekunden und insbesondere 14 bis 22 Sekunden und die Gel- oder Fadenziehzeit bei vorzugsweise 60 bis 180 Sekunden, besonders bevorzugt bei 70 bis 160 und insbesondere bei 75 bis 145 Sekunden. Dabei werden die Start- und Gelzeit gemäß DIN EN 14315-1:2013 bei 25 °C im Bechertest bei einer Einwaage von 100 g Polyol-Komponente und 50 g Isocyanat-Komponente bestimmt.

Ferner sind bei der Herstellung von Polyurethanschaumstoffen ein oder mehrere Treibmittel (e) zugegen. Als Treibmittel (e) können chemisch wirkende Treibmittel und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, Fluorkohlenwasserstoffe, wie Solkane^{®} 365 mfc, oder Gase, wie Kohlendioxid.

In einer bevorzugten Ausführungsform wird als Treibmittel eine Mischung dieser Treibmittel, enthaltend Wasser, besonders bevorzugt ausschließlich Wasser, eingesetzt. Dabei wird die Treibmittelmenge so gewählt, dass die Dichte des erfindungsgemäßen Polyurethanschaumstoffs im Bereich von 30 bis 70 g/L, vorzugsweise 40 bis 60 g/L und insbesondere 45 bis55 g/L liegt. Insbesondere wird ausschließlich Wasser in einer Menge von 1 bis 6 Gew.-%, vorzugsweise 2 bis 5 Gew.-% und insbesondere 2,5 bis 4,5 Gew.-%, bezogen auf das Gesamtgewicht der Komponenten (b) bis (f) eingesetzt.

Weiter enthält die Reaktionsmischung Lactam (f). Als Lactam im Rahmen der Erfindung werden cyclische Amide verstanden, die substituiert sein können. Dabei befindet sich die Amidbindung im Ring, vorzugsweise handelt es sich nur um eine Amidgruppe im Ring. Beispiele für erfindungsgemäße sind β-Propiolactam, 2-Pyrrolidon, N-Methylpyrrolidon, γ-Butyrolactam, δ-Valerolactam (2-Piperidon) und ε-Lactam (ε-Caprolactam). Besonders bevorzugt wird ε-Caprolactam verwendet.

Als Hilfsmittel und/oder Zusatzstoffe (g) werden beispielsweise oberflächenaktive Substanzen, Schaumstabilisatoren, Zellregler, äußere und innere Trennmittel, Füllstoffe, Pigmente, Farbstoffe, Flammschutzmittel, Antistatika, Hydrolyseschutzmittel sowie fungistatisch und bakteristatisch wirkende Substanzen eingesetzt.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993, Kapitel 5, Polyurethanweichschaumstoffe

Bei der Herstellung der erfindungsgemäßen Polyurethanschaumstoffe werden üblicherweise die polymeren Verbindungen mit gegenüber Isocyanaten reaktiven Gruppen (b), die gegebenenfalls eingesetzten Kettenverlängerungs- und/oder Vernetzungsmittel (c), die Katalysatoren (d), die Treibmittel (e), Lactame (f) sowie die gegebenenfalls mit verwendeten Hilfsmittel und/oder Zusatzstoffe (g) zu einer sogenannten Polyolkomponente vermischt und in dieser Form mit den Polyisocyanaten a) zur Umsetzung gebracht.

Zur Herstellung der erfindungsgemäßen Polyurethanschaumstoffe werden die aromatischen Polyisocyanate (a) mit den polymeren Verbindungen mit gegenüber Isocyanaten reaktiven Gruppen im Beisein der genannten Treibmittel, Katalysatoren und Hilfs- und/oder Zusatzstoffe (Polyolkomponente) zur Reaktion gebracht. Dabei werden die Mischungsverhältnisse so gewählt, dass das Äquivalenz-Verhältnis von NCO-Gruppen der Polyisocyanate (a) zur Summe der reaktiven Wasserstoffatome der Komponenten (b) und (f) sowie, falls vorhanden, (c) und (d) vorzugsweise 0,5 bis 0,95 zu 1, vorzugsweise 0,6 bis 0,8 zu 1 und insbesondere 0,65 bis 0,75 zu 1 beträgt. Ein Verhältnis von 1 zu 1 entspricht dabei einem Isocyanatindex von 100.

Die Herstellung der erfindungsgemäßen Polyurethan-Schaumstoffe erfolgt vorzugsweise nach dem one-shot-Verfahren, beispielsweise mit Hilfe der Hochdruck- oder Niederdrucktechnik. Dabei werden die erfindungsgemäßen Schaumstoffe beispielsweise auf einem Band oder vorzugsweise in einer Form hergestellt. Die Polyurethanformschaumstoffe können in offenen oder geschlossenen, beispielsweise metallischen Formwerkzeugen hergestellt werden.

Besonders vorteilhaft ist es, nach dem sogenannten Zweikomponentenverfahren zu verfahren, bei dem, wie oben ausgeführt, eine Polyolkomponente hergestellt und mit Polyisocyanat (a) verschäumt wird. Die Komponenten werden vorzugsweise bei einer Temperatur im Bereich zwischen 15 bis 120 °C, vorzugsweise 20 bis 80 °C vermischt und in das Formwerkzeug beziehungsweise auf die Bandstraße gebracht. Die Temperatur im Formwerkzeug liegt zumeist im Bereich zwischen 15 und 120 °C, vorzugsweise zwischen 30 und 80 °C. Der so erhaltene Polyurethanformschaumstoff ist ebenfalls Gegenstand der vorliegenden Erfindung. Dieser ist vorzugsweise offenzellig und kann ohne Walken verwendet werden. Auch weist er eine vorzugsweise klebefreie Oberfläche auf.

Erfindungsgemäße Polyurethanschäume werden vorzugsweise im Fahrzeugbau, beispielsweise als Teppichrückseitenbeschichtung, als für Polster-, Sitz- oder Liegemöbel, für Matratzen oder Kissen, verwendet. Ein weiteres Einsatzgebiet sind Autosicherheitsteile, Auflageflächen, Armlehnen und ähnliche Teile im Möbelbereich und im Automobilbau.

Überraschenderweise wurde gefunden, dass durch Einsatz von Lactam in Kombination mit einer erfindungsgemäßen Gel- und Treibkatalyse eine Bildung von aromatischen Aminen, auch bei einem Isocyanatindex von deutlich kleiner 100 und einem Wasseranteil von deutlich größer als 1 Gew.-%, insbesondere an der Oberfläche von Formschaumstoffen, deutlich verringert und vorzugsweise unter die Nachweisgrenze gesenkt werden kann. Des Weiteren wurde gefunden, dass in solchen Schaumstoffen kein freies Lactam als mögliche Emissionsquelle innerhalb der für die Anwendung relevanten Temperaturbereiche bis 90 °C bei der Bestimmung der kondensierbaren Bestandteile, gemessen bei 90 °C gemäß VDA 278 (Fogging,), nachgewiesen werden konnte

Ein weiterer Vorteil besteht darin, dass ebenfalls der Gehalt an Aldehyden, gemessen am ausreagierten Schaum deutlich reduziert werden kann, oft um mehr als 50 %, bezogen auf einen konventionell katalysierten Schaumstoff ohne Zugabe von Lactam. Eine aufgrund von Kettenabbruch durch Lactam zu befürchtende Verschlechterung der mechanischen Eigenschaften wie z.B. des Druckverformungsrestes wurde erstaunlicherweise ebenfalls nicht festgestellt. Im Gegenteil kann eine Verbesserung der mechanischen Eigenschaften nach Schnellalterung im Autoklaven bei 120°C über 5h und bei der Feuchtwärmelagerung beobachtet werden.

Im Folgenden soll die Erfindung anhand von Beispielen dargelegt werden:
Zur Herstellung der Polyurethanschaumstoffe gemäß den Beispielen wurden folgende Einsatzstoffe verwendet:

| | |
|---|---|
| Polyol 1: | Ein Glycerin gestartetes Polyoxypropylenpolyoxyethylen mit einem Polyoxyethylenanteil von 13 Gew.-% bezogen auf den Gehalt an Alkyleneoxyd, einer Hydroxylzahl von 28 mg KOH/g und überwiegend primären Hydroxylgruppen. |
| Polyol 2: | Polymerpolyol auf der Basis von Styrol und Acrylnitril im Verhältnis 2:1, Feststoffgehalt 44 Gew-% und einer Hydroxylzahl von 20 mg KOH/g. |
| Polyol 3: | Glycerin gestartetes Polyoxypropylenpolyoxyethylen mit einem Po lyoxyethylenanteil, bezogen auf den Gehalt an Alkylenoxyd, von 74 Gew.-% und einer Hydroxylzahl von 42 mg KOH/g. |
| Polyol 4: | Propylenglykol gestartetes Propoxylat mit einer OHZ von 55 |
| Polyol 5: | Glycerin gestartetes Polyoxypropylenpolyoxyethylen mit einem Polyoxyethylenanteil von 14 Gew.-% bezogen auf den Gehalt an Alkyleneoxyd und einer Hydroxylzahl von 30 mg KOH/g |
| Polyol 5: | mit einer Mischung aus Glycerin und Diethylenglycol (74 zu 26 Gewichtsteile) gestartetes Polyoxypropylenpolyoxyethylen mit einem Polyoxyethylenanteil, bezogen auf den Gehalt an Alkylenoxyd, von 10 Gew.-% und einer Hydroxylzahl von 48 mg KOH/g. |
| Polyol 6: | Glycerin gestartetes Polyoxypropylen mit einer Hydroxylzahl von 42 mg KOH/g. |
| Katalysator 1: | 33 Gew-%ige Lösung Triethylendiamin in Dipropylenglykol. |
| Katalysator 2: | Einbaubarer, tertiärer Aminkatalysator der Fa. Evonik, erhältlich unter dem Handelsnamen Dabco ^{®} NE 300 (N-[2-[2-(Dimethylamino)ethoxyl]-N-methyl-1,3,-propandiamin). |
| Katalysator 3: | N,N-Dimethyl-N',N'-di(2-hydroxypropyl)-1,3-propandiamin, erhältlich von der Firma Huntsman unter dem Handelsnahmen Jeffcat ^{®} DPA. |
| Katalysator 4: | 3-(Dimethylamino)propylamin gestartetes Polyoxypropylen mit einem Polyoxypropylenanteil von 77 Gew.% und einer Hydroxylzahl von 250 mg KOH/g |
| Katalysator 5: | 3-(Dimethylamino)propylamin |
| Katalysator 6: | 1,4-Diazabicyclo-[2,2,2]-octan (25%) in 1,4-Butandiol (75%) |
| Katalysator 7: | Aminkatalysator Dabco^{®} 2025 der Fa. EVONIK (vormals Air Products) |
| Katalysator 8: | Diethanolamin |
| Katalysator 9: | Hydroxymethyltriethylendiamin (66,7 Gew.-%) in Dipropylenglycol |
| Katalysator 10: | N-[2-[2-(Dimethylamino)ethoxy]ethyl]-N-methyl-1,3-propandiamin (erhältlich von Evonik unter dem Handelsnamen Dabco NE 300 |
| Katalysator 11: | N-(3-Dimethylaminopropyl)-N,N-diisopropanolamin (erhältlich von der Firma Huntsman unter dem Handelsnahmen Jeffcat ^{®} DPA) |
| Katalysator 12: | 10 Gew.-%-ige Lösung von Dimethylzinn-dineodecanotat in Polyol 1, erhältlich unter dem Handelsnamen Fomrez ^{®} UL 28; PU Katalysator der Firma Momentive. |
| Katalysator 13: | Zinkkomplex, erhältlich von der Firma King Industries unter dem Handelsnamen K-Kat XK-614 |
| Isocyanat 1: | Mischung von MDI und höherkernigen Homologen des MDI mit einer Viskosität bei 25 °C von 210 mPas und einem NCO-Gehalt von 31,5 Gew.-%. |
| Isocyanat 2: | Mischung aus 49 Gew.-Teilen 4,4'-MDI, 48,6 Gew.-Teile 2,4'-MDI und 2,4 Gew.-Teilen 2,2'-MDI, der NCO-Gehalt beträgt 33,5 Gew.-%. |
| Isocyanat 3: | Monomeres 4,4'-MDI mit einem NCO-Gehalt von 33,5 Gew.-%. Stabilisator: Emissionsarmer Silikonstabilisator |
| Fänger: | Dodecylbernsteinsäureanhydrid. |

Ausgehend von den in Tabelle 1 angegebenen Ausgangsstoffen wurde in einer geschlossenen Form Prüfplatten der Dimension 18,5 x 19,5 x 3,8 cm hergestellt. Dabei wurde eine Polyolkomponente gemäß der in den Tabellen angegebenen Zusammensetzungen hergestellt, in einem Hochdruckmischkopf bei 35 °C mit der angegebenen Isocyanatkomponente bei angegebenem Isocyanatindex vermischt und in die auf 60 °C temperierte Form gegeben. Die Mengenangaben der Einsatzstoffe beziehen sich dabei auf Gewichtsteile in Prozent, der Gehalt an tertiärem Stickstoff pro 100 g Schaum ist in Mol /100g Schaumstoff unddie MDA-Konzentration ist in ppm angegeben. Dabei wurden zur Berechnung des Gehalts an tertiärem Stickstoff nur Verbuíndungen einbezogen, die eine relative Reaktivität, bezogen auf Triethylendiamin, von mindestens 5% aufweisen. Nach 5 Minuten wurde das Formteil entformt, die Dichte betrug ca. 50 g/dm³.

**Tabelle 1**

| Polyolkomponente | Vergleich 1 | Vergleich 2 | Vergleich 3 | Vergleich 4 | Vergleich 5 |
|---|---|---|---|---|---|
| Polyol 1 | 64,85 | 64,22 | 64,22 | 63,60 | 63,35 |
| Polyol 2 | 15,00 | 15,00 | 15,00 | 15,00 | 15,00 |
| Polyol 3 | 14,00 | 14,00 | 14,00 | 14,00 | 14,00 |
| Katalysator 1 | 0,10 | 0,10 | 0,10 | 0,10 | 0,10 |
| Katalysator 2 | 0,10 | 0,10 | 0,10 | 0,10 | 0,10 |
| Katalysator 3 | 1,00 | 1,00 | 1,00 | 1,00 | 1,00 |
| Katalysator 4 | 1,00 | 1,00 | 1,00 | 1,00 | 1,00 |
| Katalysator 12 | - | - | - | - | - |
| ε-Caprolactam | 0,00 | 0,31 | 0,63 | 1,25 | 1,50 |
| Stabilisator | 0,50 | 0,50 | 0,50 | 0,50 | 0,50 |
| Wasser | 3,45 | 3,45 | 3,45 | 3,45 | 3,45 |

| Isocyanatkomponente | | | | | |
|---|---|---|---|---|---|
| Isocyanat1 | 37,5 | 37,5 | 37,5 | 37,5 | 37,5 |
| Isocyanat 2 | 42,1 | 42,1 | 42,1 | 42,1 | 42,1 |
| Isocyanat 3 | 20,4 | 20,4 | 20,4 | 20,4 | 20,4 |
| Index | 75,0 | 75,0 | 75,0 | 75,0 | 75,0 |
| 2,4'-MDA | 87 | 77 | 70 | 57 | 32 |
| 4,4'-MDA | 6 | 5 | 4 | 3 | <1 |
| Gehalt an tert. N / 100g Schaum | 0,021 | 0,021 | 0,021 | 0,021 | 0,021 |

**Tabelle 1 Fortsetzung**

| Polyolkomponente | Vergleich 6 | Beispiel 1 | Vergleich 7 | Beispiel 2 | Vergleich 8 | Beispiel 3 |
|---|---|---|---|---|---|---|
| Polyol 1 | 62,35 | 65,85 | | | | |
| Polyol 2 | 15,00 | 15,00 | | | 32 | 32 |
| Polyol 3 | 14,00 | 14,00 | 78 | 76,5 | 4,8 | 4,8 |
| Polyol 4 | - | - | 16 | 16 | | |
| Polyol 5 | | | 2 | 2 | 58,05 | 58,10 |
| Katalysator1 | 0,10 | - | 0,4 | | | |
| Katalysator 2 | 0,10 | 0,10 | | 0,2 | | 0,2 |
| Katalysator 3 | 1,00 | - | | | | |
| Katalysator 4 | 1,00 | | | | | |
| Katalysator 5 | | | 0,1 | | 0,25 | |
| Katalysator 6 | | | | | 0,45 | |
| Katalysator 7 | | | | | 0,25 | |
| Katalysator 8 | | | | | 0,2 | 0,2 |
| Katalysator 12 | - | 0,10 | | 0,3 | | 0,3 |
| Deodecylbernsteinsäureanhydrid | 2,50 | - | | | | |
| ε-Caprolactam | | 1,50 | | 1,50 | | 0,5 |
| Stabilisator | 0,50 | 0,50 | 0,02 | 0,02 | 0,4 | 0,4 |
| Wasser | 3,45 | 3,45 | 3,5 | 3,5 | 3,55 | 3,55 |
| Isocyanatkomponente | | | | | | |
| Isocyanat 1 | 37,5 | 37,5 | 20 | 20 | 40 | 40 |
| Isocyanat 2 | 42,1 | 42,1 | 80 | 80 | 50 | 50 |
| Isocyanat 3 | 20,4 | 20,4 | | | 10 | 10 |
| Index | 75,0 | 75,0 | 75 | 75 | | |
| 2,4-MDA | | | 3 | <1 | | |
| 2,4'-MDA | 49 | <1 | 18 | <1 | 24 | <1 |
| 4,4'-MDA | 2 | <1 | <1 | <1 | 3 | <1 |
| Gehalt an tert. N / 100g Schaum | 0,021 | 0,00066 | 0,0043 | 0,00066 | 0,003+x(Dabco 2025) | 0,0013 |

Gemäß Tabelle 2 wurden in analogem Verfahren weitere Polyurethanschaumstoffe hergestellt und neben dem MDA-Gehalt auch die mechanischen Eigenschaften ermittelt. Diese sind ebenfalls in Tabelle 2 angegeben. Dabei wurde in Vergleichsversuch 10 und Beispiel 8 jeweils ein Isocyanatprepolymer eingesetzt, das aus den angegebenen Komponenten erhalten wurde.

**Tabelle 2**

| Polyolkomponente | Vergleich 9 | Beispiel 4 | Beispiel 5 | Beispiel 6 | Beispiel 7 | Vergleich 10 | Beispiel 8 |
|---|---|---|---|---|---|---|---|
| Polyol 1 | 64,85 | 63,85 | 66,25 | 65,15 | 65,05 | 76,6 | 76,6 |
| Polyol 2 | 15,00 | 15,00 | 15,00 | 15,00 | 15,00 | 15 | 15 |
| Polyol 3 | 14,00 | 14.00 | 14,00 | 14,00 | 14,00 | 2 | 2 |
| Katalysator 1 | 0,10 | - | - | - | - | 0,1 | |
| Katalysator 2 | 0,10 | 0,10 | 0,10 | 0,10 | 0,20 | | |
| Katalysator 3 | 1,00 | - | - | - | - | | |
| Katalysator4 | 1,00 | | | | | 1,0 | |
| Katakyssator 9 | | | | | | | 0,2 |
| Katalysator 10 | | | | | | 0,1 | 0,2 |
| Katalysator 11 | | | | | | 1 | |
| Katalysator12 | - | 0,10 | 0,20 | 0,30 | 0,30 | | |
| Katalysator 13 | | | | | | | 0,3 |
| ε-Caprolactam | - | 3,00 | 1,50 | 1,50 | 1,50 | | 1,5 |
| Stabilisator | 0,50 | 0,50 | 0,50 | 0,50 | 0,50 | 0,7 | 0,7 |
| Wasser | 3,45 | 3,45 | 3,45 | 3,45 | 3,45 | 3,5 | 3,5 |
| Isocyanatkomponente | 14,00 | 14.00 | 14,00 | 14,00 | 14,00 | | |
| Isocyanat 1 | 37,5 | 37,5 | 37,5 | 37,5 | 37,5 | 36 | 36 |
| Isocyanat 2 | 42,1 | 42,1 | 42,1 | 42,1 | 42,1 | 32 | 32 |
| Isocyanat 3 | 20,4 | 20,4 | 20,4 | 20,4 | 20,4 | 20 | 20 |
| Polyol 3 | | | | | | 2 | 2 |
| Polyol 6 | | | | | | 10 | 10 |
| Index | 70,0 | 70,0 | 70,0 | 70,0 | 70,0 | 70 | 70 |
| | | | | | | | |
| Startzeit [s] | 14 | 22 | 22 | 21 | 16 | 12 | 12 |
| Gelzeit [s] | 53 | 104 | 104 | 93 | 70 | 51 | 49 |
| Steigzeit [s] | 76 | 145 | 145 | 135 | 100 | 72 | 70 |
| 2,2' MDA | | | | | | 6 | 1 |
| 2,4'-MDA | 96 | <1 | <1 | <1 | <1 | 78 | 2 |
| 4,4'-MDA | 7 | <1 | <1 | <1 | <1 | 5 | <1 |
| Gehalt an tert. N / 100g Schaum | 0,021 | 0,00066 | 0,00066 | 0,00066 | 0,0013 | 0,0072 | 0,0013 |

In Tabelle 3 sind die mechanischen Eigenschaften aufgeführt, die für die Schaumstoffe gemäß Vergleichsbeispiel 8 und den Beispielen 2 bis 5 ermittelt wurden.

| | Vergleich 7 | Beispiel 4 | Beispiel 5 | Beispiel 6 | Beispiel 7 | Vergleich 8 | Beispiel 10 |
|---|---|---|---|---|---|---|---|
| Stauchhärte 40% [kPa] | 4,1 | 6,4 | 6,4 | 5,0 | 4,9 | 3,9 | 3,6 |
| Stauchhärte 65% [kPa] | 9,2 | 14,3 | 14,3 | 11,0 | 10,7 | 8,8 | 8,1 |
| Hysterese bei 70% Kompression [%] | 24,0 | 27,7 | 27,7 | 23,0 | 23,4 | n.b. | n.b. |
| Dichte [kg/m3] | 55,3 | 56,4 | 56,4 | 50,6 | 51,0 | 55,2 | 55,2 |
| Druckverformungsrest bei 50% Kompression [%] | 9,5 | 5,8 | 5,8 | 6,2 | 6,5 | 9,5 | 11,7 |
| Druckverformungsrest bei 75% Kompression [%] | 62,8 | 7,1 | 7,1 | 7,3 | 7,8 | n.b. | n.b. |
| Druckverformungsrest bei 90% Kompression [%] | 83,2 | 57,5 | 57,5 | 64,9 | 76,3 | n.b. | n.b. |
| Zugfestigkeit [kPa] | 90 | 107 | 107 | 117 | 122 | 92 | 80 |
| Bruchdehnung [%] | 99 | 106 | 106 | 107 | 109 | 95 | 97 |
| Luftdurchlässigkeit [dm3/s] | 0.349 | 0,901 | 0,901 | 0,477 | 0,410 | Geschlossenindexzellig | offenzellig |
| Rückprallelastizität [%] | 54 | 52 | 52 | 58 | 58 | 54 | 48 |
| Weiterreissfestigkeit [N/mm] | 0.37 | 0,52 | 0,52 | 0,42 | 0,41 | 0,40 | 0,35 |
| Druckverformungsrest nach Autoklavalterung (50% Kompression/5h/120°C, 3 Cyclen) [%] | 55,0 | 10,1 | 10,1 | 12,3 | 11,3 | 44,1 | 27,4 |
| Formaldehydemission [µg/m³] | 726 | n.b. | n.b. | n.b. | 341 | n.b. | n.b. |
| Acetaldehydemission [µg/m³] | 140 | n.b. | n.b. | n.b. | 60 | n.b. | n.b. |
| FOG*[ppm] | 259 | n.b. | n.b. | n.b. | 109 | n.b. | n.b. |

| | | | | | | | |
|---|---|---|---|---|---|---|---|
| *gemessen nach den Angaben zur Bestimmung der Emissionswerte. n.b. = nicht bestimmt | | | | | | | |

Tabelle 3 zeigt, dass durch Anwendung der erfindungsgemäßen Katalysatoren zum Teil erhebliche Verbesserungen in den mechanischen Eigenschaften gemessen werden. Es verbessern sich bei vergleichbarer Dichte der Schaumstoffe die Druckverformungsreste, gemessen bei 50, 75 und 90 % Deformation. Die Offenzelligkeit (gemessen als Luftdurchlässigkeit) und insbesondere und überraschend der Druckverformungsrest nach Autoklavalterung (50% Kompression/5h/120°C, 3 Zyklen). Diese Werte wurden wie folgt bestimmt:

| Mechanische Prüfung | Vorschrift |
|---|---|
| Stauchhärte bei 25%, 40% und 65% Kompression | DIN EN ISO 3386 |
| Hysterese bei 70% Kompression | DIN EN ISO 3386 |
| Dichte | DIN EN ISO 845 |
| Druckverformungsrest (22h/70°C/50% Kompression) | DIN EN ISO 1856 |
| | In Anlehnung an die DIN ISO 1856, nach 5h Autoklavlagerung bei 120 Grad Celsius und 50% Kormpression (3 Cyclen). |
| Druckverformungsrest nach Autoklavalterung | |
| Zugfestigkeit | DIN EN ISO 1798 |
| Bruchdehnung | DIN EN ISO 1798 |
| Weiterreißwiderstand (Graves m. Einschnitt) | DIN EN ISO 34-1,B (b) |
| Rückprallelastizität | DIN EN ISO 8307 |

Emissionswerte:
Die Schaumproben aus Vergleichsbeispiel 8 und Beispiel 5 wurden mittels Kammermethode und anschließender HPLC untersucht. Zur Bestimmung von Formaldehyd wurde analog ASTM D-5116-06 vorgegangen. Die Kammergröße betrug 4,7 Litern. Als Polyurethanproben wurden Schaumstoffe mit einer Größe von 110 mm x 100 mm x 25 mm aus dem Kern des Schaumstoffs eingesetzt. Die Temperatur in der Meßkammer betrug während der Messung 65 °C, die relative Luftfeuchtigkeit 50 %. Die Luftaustauschrate betrug 3,0 Liter pro Stunde. Der Abluftstrom mit flüchtigen Aldehyden aus dem Polyurethan wurden über 120 Minuten durch eine Kartusche mit 2,4-Dinitrophenylhydrazin beschichtetes Silika geleitet. Die DNPH-Kartusche wurde anschließend mit einem Gemisch von Acetonitril und Wasser eluiert. Die Konzentration von Formaldehyd im Eluat wurde mittels HPLC bestimmt. Nach diesem Aufbau liegt die Nachweisgrenze für Formaldehydemissionen bei ≤ 11 µg/m³.

Im Rahmen der vorliegenden Erfindung wurde der Gehalt an aromatischen Aminen wie folgt bestimmt:
Die Bestimmung der Konzentration an aromatischen Aminen an Formteilen aus Polyurethanweichformschaum erfolgte in Anlehnung an die Prüfmethode der ISOPA I.I.I.: Nachweismethode auf MDA (ISOPA I.I.I. ref. 11399, "Robust method for the determination of the diaminodiphenylmethane content of flexible polyurethane foams". Dazu wurden die Proben nach der Herstellung gesägt und sofort in Aluminiumfolie und einem Kunststoffbeutel verpackt. Die Dauer zwischen Entformen und Verpacken lag bei 30min.

Die Oberfläche des Formschaumstoffs wurde in Form von Platten mit einer Dicke von 0,5 cm abgetrennt. Aus diesen Platten wurden Proben mit jeweils 3 cm x 3 cm ausgeschnitten und zu einem Würfel von 3 x 3 x 3 cm zusammen gestapelt und vermessen. Der Weichschaumwürfel wurde in einem Becherglas mit 10 mL 1%-iger Essigsäure (Angabe in Massen-%) versetzt. Der Würfel wurde zwanzigfach mittels eines Stempels (ca. 4 cm Durchmesser) ausgequetscht und die Lösung in einen 50ml Kolben übergeführt. Anschließend wurde der Stampfprozess zwei Mal mit jeweils weiteren 10mL 1%-iger Essigsäure wiederholt, wobei auch diese Essigsäure nach dem Stampfprozess in den Kolben überführt wurde. Nach Vereinigung der erhaltenen Extrakte wurde auf 50 mL mit 1%-iger Essigsäure aufgefüllt. Diese Lösung wurde zur Vorbereitung der HPLC-Analyse durch ein 0,45µm-Filter filtriert. Es erfolgte eine Doppelbestimmung in allen Fällen. Die MDA-Gehalte werden in ppm angegeben.

## Patentansprüche

1. Verfahren zur Herstellung von Polyurethanschaumstoffen mit einer Dichte von 30 g/dm³ bis 70 g/dm³, bei dem man
a) aromatisches Polyisocyanat mit
b) polymeren Verbindungen mit gegenüber Isocyanaten reaktiven Gruppen,
c) gegebenenfalls Kettenverlängerungs- und/oder Vernetzungsmittel,
d) Katalysator,
e) Treibmittel, enthaltend Wasser,
f) 0,1 bis 5 Gew.-% Lactam, bezogen auf das Gesamtgewicht der Komponenten (a) bis (f) und
g) gegebenenfalls Zusatzstoffen,
bei einem Isocyanatindex von 50 bis 95 zu einer Reaktionsmischung vermischt, die Reaktionsmischung zum Polyurethanweichschaumstoff umsetzt,
wobei der Katalysator Metallkatalysator und Aminkatalysator enthält und der Aminkatalysator tertiäre Stickstoffatome aufweist und in einer solchen Menge eingesetzt wird, dass der Gehalt an tertiären Stickstoffatomen im Aminkatalysator, bezogen auf das Gewicht der Ausgangskomponenten (a) bis (f), von 0,0001 bis 0,003 mol /100 g Schaum beträgt.

2. Verfahren nach Anspruch 1, **dadurch gekennzeichnet, dass** der Aminkatalysator eine Reaktivität von mindestens 5 %, bezogen auf 1,4-Diazabicyclo[2.2.2]octan aufweist.

3. Verfahren nach Anspruch 1 oder Anspruch 2, **dadurch gekennzeichnet, dass** die Katalysatoren in solchen Mengen eingesetzt werden, dass die Polyurethanreaktionsmischung eine Steigzeit von 30 bis 150 Sekunden aufweist.

4. Verfahren nach einem der Ansprüche 1 bis 3, **dadurch gekennzeichnet, dass** der Gehalt an Wasser, bezogen auf die Komponenten (b) bis (f), 1 bis 5 Gew.-% beträgt.

5. Verfahren nach einem der Ansprüche 1 bis 4, **dadurch gekennzeichnet, dass** neben Wasser keine weiteren Treibmittel enthalten sind.

6. Verfahren nach einem der Ansprüche 1 bis 5, **dadurch gekennzeichnet, dass** das Lactam (f) ε-Caprolactam ist.

7. Verfahren nach einem der Ansprüche 1 bis 6, **dadurch gekennzeichnet, dass** der Aminkatalysator mindestens eine gegenüber Isocyanat reaktive Gruppe aufweist.

8. Verfahren nach einem der Ansprüche 1 bis 7, **dadurch gekennzeichnet, dass** der Aminkatalysators zwei tertiäre Stickstoffatome im Molekül aufweist.

9. Verfahren nach einem der Ansprüche 1 bis 8, **dadurch gekennzeichnet, dass** die tertiären Stickstoffatome des Aminkatalysators mindestens einen Methylenrest H₃C- oder Ethylenrest H₃C-H₂C- aufweisen.

10. Verfahren nach einem der Ansprüche 1 bis 6, **dadurch gekennzeichnet, dass** der Aminkatalysator ausgewählt ist aus der Gruppe, bestehend aus Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethyl-bis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-aminoethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethylamin, N,N,N-Trimethyl-N-(3 aminopropyl)-bis(aminoethylether), 3-Dimethylaminoisopropyl-diisopropanolamin, N-[2-[2-(Dimethylamino)ethoxy]ethyl]-N-methyl-1,3,-propandiamin und Mischungen davon.

11. Verfahren nach einem der Ansprüche 1 bis 10, **dadurch gekennzeichnet, dass** der Metallkatalysator ein Zinn(IV)-katalysator ist.

12. Verfahren nach einem der Ansprüche 1 bis 11, **dadurch gekennzeichnet, dass** das aromatische Polyisocyanat Isomere und Homologe des Diphenylmethandiisocyanats enthält.

13. Verfahren nach einem der Ansprüche 1 bis 12, **dadurch gekennzeichnet, dass** zur Herstellung der Reaktionsmischung eine Isocyanatkomponente (A), enthaltend aromatisches Polyisocyanat (a), und eine Polyolkomponente (B), enthaltend eine Mischung, umfassend polymeren Verbindungen mit gegenüber Isocyanaten reaktiven Gruppen (b), Katalysator (d) und Treibmittel, enthaltend Wasser (e) vermischt werden.

14. Verfahren nach einem der Ansprüche 1 bis 13, **dadurch gekennzeichnet, dass** die Umsetzung der Reaktionsmischung zum Polyurethanweichschaumstoff in einer Form erfolgt.

15. Polyurethanschaumstoff, erhältlich nach einem Verfahren gemäß einem der Ansprüche 1 bis 14.

16. Verwendung eines Polyurethanschaumstoffs nach Anspruch 15 zur Herstellung von Kissen, Sitzpolstern, Matratzen.

## Claims

1. A process for producing polyurethane foams having a density of 30 g/dm³ to 70 g/dm³, in which
a) aromatic polyisocyanate is mixed with
b) polymeric compounds having isocyanate-reactive groups,
c) optionally chain extender and/or crosslinking agent,
d) catalyst,
e) blowing agent, comprising water,
f) 0.1% to 5% by weight of lactam, based on the total weight of components (a) to (f), and
g) optionally additives,
at an isocyanate index of 50 to 95 to form a reaction mixture, and the reaction mixture is converted to the flexible polyurethane foam,
wherein the catalyst comprises metal catalyst and amine catalyst and the amine catalyst has tertiary nitrogen atoms and is used in such an amount that the content of tertiary nitrogen atoms in the amine catalyst, based on the weight of starting components (a) to (f), is from 0.0001 to 0.003 mol/100 g of foam.

2. The process according to claim 1, wherein the amine catalyst has a reactivity of at least 5%, based on 1,4-diazabicyclo[2.2.2]octane.

3. The process according to claim 1 or claim 2, wherein the catalysts are used in amounts such that the polyurethane reaction mixture has a rise time of 30 to 150 seconds.

4. The process according to one of claims 1 to 3, wherein the content of water, based on components (b) to (f), is 1% to 5% by weight.

5. The process according to one of claims 1 to 4, wherein no further blowing agents other than water are present.

6. The process according to one of claims 1 to 5, wherein the lactam (f) is ε-caprolactam.

7. The process according to one of claims 1 to 6, wherein the amine catalyst has at least one isocyanate-reactive group.

8. The process according to one of claims 1 to 7, wherein the amine catalyst has two tertiary nitrogen atoms in the molecule.

9. The process according to one of claims 1 to 8, wherein the tertiary nitrogen atoms of the amine catalyst have at least one methylene radical H₃C- or ethylene radical H₃C-H₂C-.

10. The process according to one of claims 1 to 6, wherein the amine catalyst is selected from the group consisting of bisdimethylaminopropylurea, bis(N,N-dimethylaminoethoxyethyl) carbamate, dimethylaminopropylurea, N,N,N-trimethyl-N-hydroxyethylbis(aminopropyl ether), N,N,N-trimethyl-N-hydroxyethylbis(aminoethyl ether), diethylethanolamine, bis(N,N-dimethyl-3-aminopropyl)amine, dimethylaminopropylamine, 3-dimethylaminopropyl-N,N-dimethylpropane-1,3-diamine, dimethyl-2-(2-aminoethoxyethanol) and (1,3-bis(dimethylamino)propan-2-ol), N,N-bis(3-dimethylaminopropyl)-N-isopropanolamine, bis(dimethylaminopropyl)-2-hydroxyethylamine, N,N,N-trimethyl-N-(3 aminopropyl)bis(aminoethyl ether), 3-dimethylaminoisopropyldiisopropanolamine, N-[2-[2-(dimethylamino)ethoxy]ethyl]-N-methyl-1,3-propanediamine and mixtures thereof.

11. The process according to one of claims 1 to 10, wherein the metal catalyst is a tin(IV) catalyst.

12. The process according to one of claims 1 to 11, wherein the aromatic polyisocyanate comprises isomers and homologs of diphenylmethane diisocyanate.

13. The process according to one of claims 1 to 12, wherein, for the preparation of the reaction mixture, an isocyanate component (A), comprising aromatic polyisocyanate (a), and a polyol component (B), comprising a mixture, comprising polymeric compounds having isocyanate-reactive groups (b), catalyst (d) and blowing agent, comprising water (e), are mixed.

14. The process according to one of claims 1 to 13, wherein the reaction mixture is converted to the flexible polyurethane foam in a mold.

15. A polyurethane foam obtainable by a process according to one of claims 1 to 14.

16. The use of a polyurethane foam according to claim 15 for the production of cushions, seat cushions, mattresses.

## Revendications

1. Procédé pour la préparation de mousses de polyuréthane présentant une densité de 30 g/dm³ à 70 g/dm³, dans lequel on mélange
a) du polyisocyanate aromatique avec
b) des composés polymères présentant des groupes réactifs par rapport aux isocyanates,
c) le cas échéant des agents d'allongement de chaîne et/ou des réticulants,
d) un catalyseur,
e) un agent gonflant, contenant de l'eau,
f) 0,1 à 5% en poids de lactame, par rapport au poids total des composants (a) à (f) et
g) le cas échéant des additifs,
à un indice d'isocyanate de 50 à 95 en un mélange réactionnel, on transforme le mélange réactionnel en mousse souple de polyuréthane,
le catalyseur contenant un catalyseur métallique et un catalyseur à base d'aminé et le catalyseur à base d'aminé présentant des atomes d'azote tertiaire et étant utilisé en une quantité telle que la teneur en atomes d'azote tertiaire dans le catalyseur à base d'amine, par rapport au poids des composants de départ (a) à (f), est de 0,0001 à 0,003 mole/100 g de mousse.

2. Procédé selon la revendication 1, caractérisé à ce que le catalyseur à base d'aminé présente une réactivité d'au moins 5%, par rapport au 1,4-diazabicyclo[2.2.2]octane.

3. Procédé selon la revendication 1 ou la revendication 2, **caractérisé en ce que** les catalyseurs sont utilisés en des quantités telles que le mélange réactionnel de polyuréthane présente un temps de gonflement de 30 à 150 secondes.

4. Procédé selon l'une quelconque des revendications 1 à 3, **caractérisé en ce que** la teneur en eau, par rapport aux composants (b) à (f), est de 1 à 5% en poids.

5. Procédé selon l'une quelconque des revendications 1 à 4, **caractérisé en ce que**, outre l'eau, aucun autre agent gonflant n'est contenu.

6. Procédé selon l'une quelconque des revendications 1 à 5, **caractérisé en ce que** le lactame (f) est l'ε-caprolactame.

7. Procédé selon l'une quelconque des revendications 1 à 6, **caractérisé en ce que** le catalyseur à base d'aminé présente au moins un groupe réactif par rapport à isocyanate.

8. Procédé selon l'une quelconque des revendications 1 à 7, **caractérisé en ce que** le catalyseur à base d'aminé présente deux atomes d'azote tertiaire dans la molécule.

9. Procédé selon l'une quelconque des revendications 1 à 8, **caractérisé en ce que** les atomes d'azote tertiaire du catalyseur à base d'aminé présentent au moins un radical méthylène H₃C- ou éthylène H₃C-H₂C-.

10. Procédé selon l'une quelconque des revendications 1 à 6, **caractérisé en ce que** le catalyseur à base d'aminé est choisi dans le groupe constitué par la bis-diméthylaminopropylurée, le bis(N,N-diméthylaminoéthoxyéthyl)carbamate, la diméthylaminopropylurée, le N,N,N-triméthyl-N-hydroxyéthyl-bis(aminopropyléther), le N,N,N-triméthyl-N-hydroxyéthyl-bis(aminoéthyléther), la diéthyléthanolamine, la bis(N,N-diméthyl-3-aminopropyl) amine, la diméthylaminopropylamine, la 3-diméthylaminopropyl-N,N-diméthylpropane-1,3-diamine, le diméthyl-2-(2-aminoéthoxyéthanol) et le (1,3-bis(diméthylamino)-propan-2-ol), la N,N-bis-(3-diméthylaminopropyl)-N-isopropanolamine, la bis-(diméthylaminopropyl)-2-hydroxyéthylamine, le N,N,N-triméthyl-N-(3-aminopropyl)-bis(aminoéthyléther), la 3-diméthylamino-isopropyldiisopropanolamine, la N-[2-[2-(diméthylamino)éthoxy]éthyl]-N-méthyl-1,3-propanediamine et leurs mélanges.

11. Procédé selon l'une quelconque des revendications 1 à 10, **caractérisé en ce que** le catalyseur métallique est un catalyseur à base d'étain (IV).

12. Procédé selon l'une quelconque des revendications 1 à 11, **caractérisé en ce que** le polyisocyanate aromatique contient des isomères et des homologues du diisocyanate de diphénylméthane.

13. Procédé selon l'une quelconque des revendications 1 à 12, **caractérisé en ce que**, pour la préparation du mélange réactionnel, un composant isocyanate (A), contenant un polyisocyanate aromatique (a), et un composant polyol (B), contenant un mélange, comprenant des composés polymères présentant des groupes réactifs par rapport à isocyanate (b), un catalyseur (d) et un agent gonflant contenant de l'eau (e) sont mélangés.

14. Procédé selon l'une quelconque des revendications 1 à 13, **caractérisé en ce que** la transformation du mélange réactionnel en mousse souple de polyuréthane est réalisée dans un moule.

15. Mousse de polyuréthane, pouvant être obtenue selon un procédé selon l'une quelconque des revendications 1 à 14.

16. Utilisation d'une mousse souple de polyuréthane selon la revendication 15 pour la fabrication de coussins, de rembourrages de siège, de matelas
